(19) Europäisches Patentamt
European Patent Office
Office européen des brevets

(11) EP 4 195 328 A1

(12) EUROPEAN PATENT APPLICATION

(43) Date of publication:
**14.06.2023 Bulletin 2023/24**

(21) Application number: **22210757.5**

(22) Date of filing: **01.12.2022**

(51) International Patent Classification (IPC):
***H01M 4/62*** (2006.01) ***H01M 4/133*** (2010.01)
***H01M 4/134*** (2010.01) ***H01M 4/36*** (2006.01)
***H01M 4/38*** (2006.01) ***H01M 4/587*** (2010.01)
*H01M 4/02* (2006.01)

(52) Cooperative Patent Classification (CPC):
**H01M 4/622; H01M 4/133; H01M 4/134; H01M 4/364; H01M 4/386; H01M 4/587;**
H01M 2004/027

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.12.2021 KR 20210176985**

(71) Applicants:
- **SK Innovation Co., Ltd.**
  **Seoul 03188 (KR)**
- **SK On Co., Ltd.**
  **Seoul 03161 (KR)**

(72) Inventors:
- **SON, Jun Soo**
  **34124 Daejeon (KR)**
- **PARK, Gwi Ok**
  **34124 Daejeon (KR)**
- **YOO, Seok Keun**
  **34124 Daejeon (KR)**
- **SEON, Min Kyung**
  **34124 Daejeon (KR)**
- **JEONG, Ji Sang**
  **34124 Daejeon (KR)**
- **CHUNG, Ju Ho**
  **34124 Daejeon (KR)**

(74) Representative: **Prüfer & Partner mbB**
**Patentanwälte · Rechtsanwälte**
**Sohnckestraße 12**
**81479 München (DE)**

# (54) BINDER FOR SECONDARY BATTERY, NEGATIVE ELECTRODE FOR SECONDARY BATTERY INCLUDING THE SAME, AND LITHIUM SECONDARY BATTERY INCLUDING THE SAME

(57) Provided is a novel binder for a secondary battery including a copolymer for a binder for a secondary battery containing specific repeating units. A negative electrode manufactured by mixing the binder with a negative electrode active material and a secondary battery including the negative electrode have excellent mechanical properties and an improved binding force, thereby effectively suppressing exfoliation and desorption of the negative electrode and expansion of the negative electrode even when a silicon-based negative electrode active material is used, and providing a negative electrode for a secondary battery having improved charge/discharge cycle characteristics and battery performance, and a secondary battery including the same.

EP 4 195 328 A1

## Description

### CROSS-REFERENCE TO RELATED APPLICATION

This application claims priority to Korean Patent Application No. 10-2021-0176985, filed December 10, 2021, the disclosure of which is hereby incorporated by reference in its entirety.

### BACKGROUND OF THE INVENTION

### FIELD OF THE INVENTION

The following disclosure relates to a binder for a secondary battery, a negative electrode including the same, and a secondary battery including the same.

More particularly, the following disclosure relates to a novel binder including a copolymer containing a specific repeating unit, a negative electrode for a secondary battery having excellent mechanical properties and an improved binding force, prepared using the binder, and a secondary battery including the same.

### DESCRIPTION OF RELATED ART

As a secondary battery application range is expanded to electric vehicles and power storage, a demand for developing an electrode having high stability, long cycle life, high energy density, and high output properties is growing.

A lithium secondary battery may be a battery including a positive electrode including a positive electrode active material capable of inserting/desorbing lithium ions, a negative electrode including a negative electrode active material, a microporous separator between the positive electrode and the negative electrode, and a nonaqueous electrolyte.

Among them, as a negative electrode active material, a silicon-based active material is increasingly used due to a significantly increased charge and discharge capacity, but the volume expands by a lithium ion during charging and discharging, thereby greatly affecting the stability of the battery. For example, when a silicon-based material is used as the negative electrode active material, the volume may be increased up to 300% in some cases, and thus, there is a limitation to using it, which causes charge and discharge characteristics to be significantly lowered.

In order to solve the problem, a technology of a binder for a negative electrode active material is being developed. For example, in order to suppress a change in volume due to the charge and discharge of, in particular, a silicon-based negative electrode active material as described above, a technology of forming a negative electrode active material layer using a binder such as carboxymethyl cellulose (CMC) and styrene butadiene rubber (SBR) as the binder of the negative electrode active material has been developed. However, the binder for a negative electrode active material may partly solve the problem of excessive volume expansion, but there is still a need to suppress volume expansion, and also, there is still a problem in that due to its low adhesion, an active material is desorbed as charge and discharge progress, thereby deteriorating battery characteristics.

Therefore, there is a need to develop a novel binder for a negative electrode active material, which suppresses a change in volume of an electrode occurring as charge and discharge progress, retains sufficient adhesive strength to prevent deterioration of battery performance due to release or desorption of a negative electrode, and is not deteriorated.

In addition, a novel binder for a secondary battery, which may promote battery cycle life and performance improvement by developing a binder having the characteristics, is demanded.

### SUMMARY OF THE INVENTION

An embodiment of the present invention is directed to providing a binder for a secondary battery having excellent mechanical properties and improved adhesion.

Another embodiment of the present invention is directed to providing a negative electrode slurry composition for a secondary battery having improved coatability and adhesion and a negative electrode including the same, by using the binder.

Still another embodiment of the present invention is directed to providing a negative electrode having significantly improved charge/discharge cycle characteristics and battery performance and a secondary battery including the same, by effectively suppressing desorption of a negative electrode and expansion of a negative electrode.

The present disclosure provides a binder for a secondary battery, the binder comprising: a copolymer comprising a repeating unit (a) of Chemical Formula 1, a repeating unit (b) of Chemical Formula 2, a repeating unit (c) of Chemical Formula 3, a repeating unit (d) of Chemical Formula 4, and a repeating unit (e) of Chemical Formula 5.

[Chemical Formula 1]

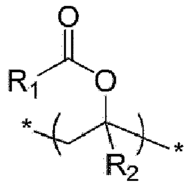

[Chemical Formula 2]

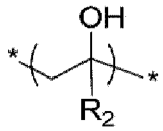

[Chemical Formula 3]

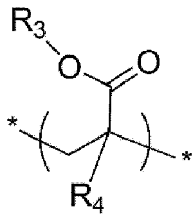

[Chemical Formula 4]

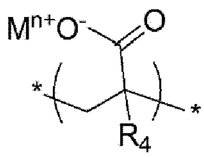

[Chemical Formula 5]

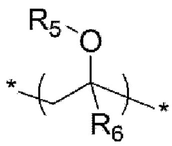

wherein

$R_1$, $R_3$, and $R_5$ are independently of one another substituted or unsubstituted hydrocarbyl having 1 to 10 carbon atoms;
$R_2$, $R_4$, and $R_6$ are independently of one another hydrogen or substituted or unsubstituted hydrocarbyl having 1 to 10 carbon atoms;
$M^{n+}$ is a cation having an oxidation number of n other than a hydrogen ion; and
n is an integer of 1 to 3.

In the binder for a secondary battery according to an exemplary embodiment, (a+b) : (c+d) of the copolymer may be 0.05 to 0.95 : 0.95 to 0.05, wherein a, b, c, and d are mole fractions of the repeating units (a), (b), (c), and (d), respectively, in the copolymer.

In the binder for a secondary battery according to an exemplary embodiment, e of the copolymer may be 0.005 to 0.2, or 0.01 to 0.1, wherein e is a mole fraction of the repeating unit (e) in the copolymer.

In the binder for a secondary battery according to an exemplary embodiment, in Chemical Formula 5, $R_5$ may be substituted or unsubstituted hydrocarbyl having 1 to 4 carbon atoms.
In the binder for a secondary battery according to an exemplary embodiment, the copolymer may satisfy the following Equation 1:

[Equation 1]

$$0.45 < (b+d)/(a+b+c+d+e) < 1.0$$

wherein a, b, c, d, and e are mole fractions of the repeating units (a), (b), (c), (d), and (e), respectively, in the copolymer.
In the binder for a secondary battery according to an exemplary embodiment, the copolymer may have a weight average molecular weight of 100,000 to 2,000,000 Da.
In the binder for a secondary battery according to an exemplary embodiment, the copolymer may be a linear polymer.
In the binder for a secondary battery according to an exemplary embodiment, the binder for a secondary battery may be a binder for a lithium secondary battery negative electrode.
In another general aspect, a secondary battery comprises: a positive electrode and a negative electrode for a secondary battery, wherein the negative electrode for a secondary battery comprises a current collector; and a negative electrode active material layer disposed on the current collector, and the negative electrode active material layer comprises any of the binder(s) for a secondary battery described above and a negative electrode active material.
In the secondary battery according to an exemplary embodiment, the negative electrode active material may comprise a silicon-based active material.
In the secondary battery according to a preferred exemplary embodiment, the negative electrode active material may comprise a silicon-based active material and a graphite-based active material.
In the secondary battery according to an exemplary embodiment, a mass ratio between the silicon-based active material and the graphite-based active material may be 3 to 97 : 97 to 3.
In the secondary battery according to an exemplary embodiment, the binder for a secondary battery may be included at 0.5 to 30 wt% with respect to a weight of the negative electrode active material layer.
In still another general aspect, a method of preparing a binder for a secondary battery comprises: saponifying a copolymer comprising a repeating unit (a) of the following Chemical Formula 1, a repeating unit (c) of the following Chemical Formula 3, and a repeating unit (e) of the following Chemical Formula 5 to prepare a saponified copolymer,
**[0027]** wherein the saponified copolymer is a copolymer comprising the repeating unit (a) of Chemical Formula 1, a repeating unit (b) of Chemical Formula 2, the repeating unit (c) of Chemical Formula 3, a repeating unit (d) of Chemical Formula 4, and the repeating unit (e) of Chemical Formula 5:

[Chemical Formula 1]

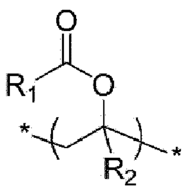

[Chemical Formula 2]

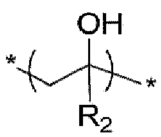

[Chemical Formula 3]

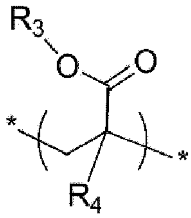

[Chemical Formula 4]

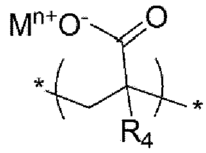

[Chemical Formula 5]

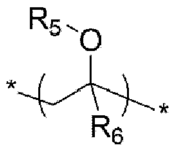

wherein

$R_1$, $R_3$, and $R_5$ are independently of one another substituted or unsubstituted hydrocarbyl having 1 to 10 carbon atoms;
$R_2$, $R_4$, and $R_6$ are independently of one another hydrogen or substituted or unsubstituted hydrocarbyl having 1 to 10 carbon atoms;
$M^{n+}$ is a cation having an oxidation number of n other than a hydrogen ion; and
n is an integer of 1 to 3.

In the method of preparing a binder for a secondary battery according to an exemplary embodiment, a degree of saponification in the saponification step may be more than 0.45 and less than 1.0, and the degree of saponification may be calculated by (b+d+e)/(a+b+c+d+e), wherein a, b, c, d, and e are mole fractions of the repeating units (a), (b), (c), (d), and (e), respectively, in the saponified copolymer.
Other features and aspects will be apparent from the following detailed description, the drawings, and the claims.

## DESCRIPTION OF THE INVENTION

Hereinafter, the present disclosure will be described in more detail. However, the following examples or exemplary embodiments are only a reference for describing the present disclosure in detail, and the present disclosure is not limited thereto and may be implemented in various forms.
In addition, unless otherwise defined, all technical terms and scientific terms have the same meanings as those commonly understood by one of those skilled in the art to which the present disclosure pertains.
The terms used for description in the present specification are only for effectively describing a certain specific exemplary embodiment, and are not intended to limit the present disclosure.
In addition, the singular form, such as "a", "an", and "the", used in the specification and claims appended thereto may be intended to also include a plural form, unless otherwise indicated in the context.
In addition, units used in the present specification without particular mention are based on weights, and as an example, a unit of % or ratio refers to a wt% or a weight ratio and wt% refers to wt% of any one component in a total composition, unless otherwise defined.
In addition, unless explicitly described to the contrary, a part "comprising" or "including" or "containing" a

constituent element will be understood to imply further inclusion of other constituent elements rather than the exclusion of any other constituent elements.

For the purposes of this specification, unless otherwise indicated, all numbers expressing quantities of ingredients, reaction conditions, dimensions, physical characteristics, and so forth used in the specification and claims are to be understood as being modified in all instances by the term "about." Unless indicated to the contrary, the numerical parameters set forth in the following specification and attached claims are approximations that can vary depending upon the desired properties sought to be obtained by the present invention.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in their respective testing measurements.

In addition, the numerical range used in the present specification may include all values within the range including the lower limit and the upper limit, increments logically derived in a form and span in a defined range, all double limited values, and all possible combinations of the upper limit and the lower limit in the numerical range defined in different forms. For example, a range of "1 to 10" is intended to include any and all sub-ranges between and including the recited minimum value of 1 and the recited maximum value of 10, that is, all subranges beginning with a minimum value equal to or greater than 1 and ending with a maximum value equal to or less than 10, and all subranges in between, e.g., 1 to 6.3, or 5.5 to 10, or 2.7 to 6.1. Unless otherwise particularly defined in the present specification, values which may be outside a numerical range due to experimental error or rounding off are also included in the defined numerical range.

A "hydrocarbon" described in the present specification refers to a chemical group containing only hydrogen and carbon atoms.

"Hydrocarbyl" or "heterohydrocarbyl" described in the present specification refers to a radical having one bonding position derived from a hydrocarbon or heterohydrocarbon, and "hetero-" means that carbon is substituted by one or more heteroatoms selected from B, O, N, C(=O), P, P(=O), S, $S(=O)_2$, and a Si atom.

"Hydrocarbylene" described in the present specification refers to a radical having two bonding positions derived from a hydrocarbon.

Hereinafter, the present disclosure will be described in more detail.

The present disclosure relates to a binder for a secondary battery comprising a copolymer for a binder for a secondary battery comprising specific repeating units. A negative electrode manufactured by mixing the binder with a negative electrode active material and a secondary battery including the negative electrode have excellent mechanical properties and an improved binding force, thereby effectively suppressing exfoliation and desorption of the negative electrode and expansion of the negative electrode even when a silicon-based negative electrode active material is used, and providing a negative electrode for a secondary battery having improved charge/discharge cycle characteristics and battery performance, and a secondary battery including the same.

The present disclosure provides a binder for a secondary battery, the binder comprising: a copolymer comprising a repeating unit (a) of Chemical Formula 1, a repeating unit (b) of Chemical Formula 2, a repeating unit (c) of Chemical Formula 3, a repeating unit (d) of Chemical Formula 4, and a repeating unit (e) of Chemical Formula 5. The binder for a secondary battery shows excellent mechanical properties and an improved binding force, thereby effectively suppressing exfoliation and desorption of the negative electrode and expansion of the negative electrode, even when a silicon-based negative electrode active material is used. Furthermore, a negative electrode for a secondary battery having improved charge/discharge cycle characteristics and battery performance, and a secondary battery including the same may be manufactured, using the binder for a secondary battery:

[Chemical Formula 1]

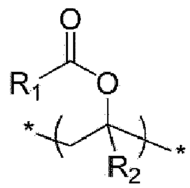

[Chemical Formula 2]

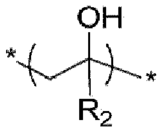

[Chemical Formula 3]

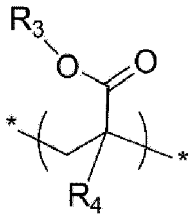

[Chemical Formula 4]

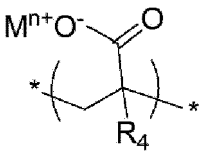

[Chemical Formula 5]

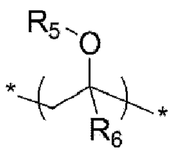

wherein $R_1$, $R_3$, and $R_5$ are independently of one another substituted or unsubstituted hydrocarbyl having 1 to 10 carbon atoms; $R_2$, $R_4$, and $R_6$ are independently of one another hydrogen, substituted or unsubstituted hydrocarbyl having 1 to 10 carbons; $M^{n+}$ is a cation having an oxidation number of n other than a hydrogen ion; and n is an integer of 1 to 3. In some non-limiting examples, $R_1$ and $R_3$ may be independently of each other alkyl having 1 to 5 carbon atoms, for example methyl, ethyl, or propyl. In some non-limiting examples, $R_2$, $R_4$, and $R_6$ may be independently of one another hydrogen or alkyl having 1 to 5 carbon atoms, for example hydrogen or methyl.

In the binder for a secondary battery according to an exemplary embodiment, in Chemical Formula 5, $R_5$ may be substituted or unsubstituted hydrocarbyl having 1 to 4 carbon atoms, for example alkyl having 1 to 4 carbon atoms, such as methyl, ethyl, propyl, or butyl. The copolymer comprising the repeating unit (e) of Chemical Formula 5 is easily polymerized, has excellent solubility in water, and has improved adhesion with an active material, thereby improving processability and workability in the preparation of a negative electrode slurry composition for a secondary battery. Furthermore, the binder for a secondary battery comprising the copolymer may have excellent tensile strength and flexibility to further improve strength and flexibility of a negative electrode active material layer.

An exemplary embodiment of the repeating unit (a) of Chemical Formula 1 may be a vinyl acetate-derived unit, an exemplary embodiment of the repeating unit (b) of Chemical Formula 2 may be a vinyl alcohol-derived unit, an exemplary embodiment of the repeating unit (c) of Chemical Formula 3 may be a (meth)acrylate-derived unit, an exemplary embodiment of the repeating unit (d) of Chemical Formula 4 may be an ionized (meth)acrylic acid-derived unit, and an exemplary embodiment of the repeating unit (e) of Chemical Formula 5 may be an alkyl vinyl ether-derived unit.

Non-limiting examples of (meth)acrylate(s) useful for preparing the (meth)acrylate-derived unit of Chemical Formula 3 may include acrylate(s) and/or methacrylate(s), and more specifically, may be one or a combination of two or more selected from the group consisting of methyl acrylate, ethyl acrylate, methyl methacrylate, ethyl methacrylate, and the like. Non-limiting examples of (meth)acrylic acid(s) useful for preparing the ionized (meth)acrylic acid-derived

unit of Chemical Formula 4 may include acrylic acid and/or methacrylic acid.

Non-limiting examples of a cation of a salt of the ionized (meth) acrylic acid may be an alkali metal ion when n is 1, for example at least one or more selected from a sodium ion, a potassium ion, a lithium ion, and the like, or an ammonium ion ($NH_4^+$). In some non-limiting examples, when n is 2, the cation of a salt of the ionized (meth)acrylic acid may be an alkaline earth metal ion, for example a calcium ion or a magnesium ion. When n is 3, the cation of a salt of the ionized (meth)acrylic acid may be an ion of a metal such as Al or Ga, but is not limited thereto as long as it is commonly used or a known metal ion.

In some non-limiting examples, the alkyl vinyl ether may be one or a combination of two or more selected from the group consisting of methyl vinyl ether, ethyl vinyl ether, n-propyl vinyl ether, isopropyl vinyl ether, n-butyl vinyl ether, isopropyl vinyl ether, tert-butyl vinyl ether, sec-butyl vinyl ether, amyl vinyl ether, hexyl vinyl ether, heptyl vinyl ether, octyl vinyl ether, nonyl vinyl ether, decyl vinyl ether, cyclohexyl vinyl ether, and the like, but is not largely limited as long as it is a monomer which may implement the repeating unit satisfying Chemical Formula 5.

The copolymer may be prepared by various known methods such as emulsion polymerization, suspension polymerization, solution polymerization, and bulk polymerization.

In addition, the copolymer may include known repeating units other than the repeating units (a) to (d), such as, for example, one or more of (meth)acrylamide monomer-derived unit, acrylonitrile monomer-derived unit, aromatic vinyl monomer-derived unit or the like, but is not limited thereto.

In the binder for a secondary battery according to an exemplary embodiment, the binder for a secondary battery including the copolymer containing repeating units (a) to (e) may improve a binding force between a negative electrode current collector and a negative electrode active material layer and/or a binding force of a negative electrode active material layer to suppress the exfoliation and the desorption of a negative electrode and improve the strength and the flexibility of the negative electrode active material layer. In addition, even when a silicon-based negative electrode active material is used, expansion may be effectively suppressed to stabilize battery performance.

The binder for a secondary battery according to an exemplary embodiment may be a binder for a lithium secondary battery negative electrode or a binder for a lithium secondary battery positive electrode, and specifically, may be a binder for a lithium secondary battery negative electrode.

In the binder for a secondary battery according to an exemplary embodiment, the copolymer may be a random copolymer, a block copolymer, or a tapered copolymer in which the repeating units (a) to (e) form a backbone, and the kind thereof is not limited. Specifically, it may be a random copolymer, and a random copolymer containing the repeating units (a) to (e) has excellent solubility in water, thereby having improved processability and workability in the preparation of a negative electrode slurry composition for a secondary battery, and has excellent tensile strength and flexibility to improve the strength and the flexibility of the negative electrode active material layer.

In the binder for a secondary battery according to an exemplary embodiment, the copolymer may be a linear polymer or a branched polymer, and specifically, may be a linear polymer. When the copolymer is a linear polymer, the copolymer has a larger radius of gyration in a solvent, and thus, may be effectively bound to the negative electrode active material, thereby more effectively suppressing the desorption of the negative electrode from the negative electrode. Accordingly, during charging and discharging of a secondary battery, the expansion of the negative electrode may be effectively suppressed to further improve the charge/discharge cycle characteristics of the secondary battery and battery performance.

In the binder for a secondary battery according to an exemplary embodiment, the copolymer may have a weight average molecular weight of 100,000 to 2,000,000 Da, or 300,000 to 1,500,000 Da, or 400,000 to 1,200,000 Da. When the weight average molecular weight range is satisfied, the mechanical properties and the adhesive properties of the binder for a secondary battery may be improved, and the exfoliation and the desorption of the negative electrode and the expansion of the negative electrode may be more effectively suppressed, thereby manufacturing a secondary battery having excellent charge/discharge cycle characteristics and battery performance.

In the binder for a secondary battery according to an exemplary embodiment, (a+b) : (c+d) of the copolymer may be at a mole fraction ratio of 0.05 to 0.95 : 0.95 to 0.05, or 0.3 to 0.9 : 0.7 to 0.1, or 0.5 to 0.85 : 0.5 to 0.15. The binder for a secondary battery including the copolymer satisfying the range shows further improved adhesive properties, and when a negative electrode and a secondary battery are manufactured using the binder, significantly improved charge/discharge cycle characteristics and battery performance may be implemented, wherein a, b, c, and d are mole fractions of the repeating units (a), (b), (c), and (d), respectively, in the copolymer.

In the binder for a secondary battery according to an exemplary embodiment, a : b of the copolymer may be at a mole fraction ratio of 0.05 to 0.6 : 0.95 to 0.4, or 0.1 to 0.5 : 0.9 to 0.5, or 0.1 to 0.4 : 0.9 to 0.6, c : d of the copolymer may be at a mole fraction ratio of 0.05 to 0.5 : 0.95 to 0.5, or, at a mole fraction ratio of 0.05 to 0.45 : 0.95 to 0.55, or 0.1 to 0.4 : 0.9 to 0.6, but they are not limited thereto as long as the purpose of the present disclosure is achieved.

In the binder for a secondary battery according to an exemplary embodiment, e of the copolymer may be 0.005 to 0.2, or 0.01 to 0.15, or 0.01 to 0.1, wherein e is a mole fraction of the repeating unit (e) in the copolymer. A binder for a secondary battery including the copolymer satisfying the range may show more improved adhesive properties.

In the binder for a secondary battery according to an exemplary embodiment, the copolymer may satisfy the following Equation 1, and specifically, may satisfy the following Equation 2:

$$\text{[Equation 1]}\ 0.45 < (b+d)/(a+b+c+d+e) < 1.0$$

$$\text{[Equation 2]}\ 0.5 < (b+d)/(a+b+c+d+e) < 0.9$$

wherein a, b, c, d, and e are mole fractions of the repeating units (a), (b), (c), (d), and (e), respectively, in the copolymer.

The binder for a secondary battery including the copolymer satisfying Equation 1, specifically Equation 2 has better tensile strength and adhesion, and also, when a negative electrode slurry composition for a secondary battery including the binder is prepared, the slurry composition has less or no agglomeration and has improved coatability, and the adhesion of the binder for a secondary battery is further improved, thereby effectively suppressing the exfoliation and the desorption of the negative electrode from a current collector. When a negative electrode and a secondary battery are manufactured using the binder for a secondary battery having adhesion as such, the expansion of a negative electrode is effectively suppressed to improve the charge/discharge cycle characteristics and the performance of a secondary battery, which is thus preferred, but the present disclosure is not limited thereto as long as the purpose of the present disclosure is achieved.

In addition, the binder for a secondary battery may further comprise one or more solvent(s) such as water and/or organic solvents as discussed below(a binder composition), and the solid content of the binder composition for a secondary battery may be 0.1 to 40 wt%, or 1 to 20 wt%, but the solvent may be used with appropriate adjustments depending on working conditions such as viscosity and coatability.

The secondary battery manufactured by using the binder for a secondary battery suppresses the expansion of a negative electrode so that a lower expansion rate and an improved capacity retention rate are shown, thereby effectively improving the charge/discharge cycle characteristics and the performance of the secondary battery.

The present disclosure may provide a negative electrode slurry composition for a secondary battery including the binder for a secondary battery described above and a negative electrode active material.

The negative electrode active material may be one or a combination of two or more selected from the group consisting of graphite-based active materials, platinum, palladium, a silicon-based active material, silver, aluminum, bismuth, tin, zinc, silicon-carbon composite materials, and the like. For example, it may be more preferred to use a silicon-based active material or a negative electrode active material comprising a silicon-based active material since better effects are shown, but it is preferred in terms of suppressing expansion, and it is not limited in terms of excellence in a binding force or electrical properties. In a preferred exemplary embodiment, the negative electrode active material may comprise a silicon-based active material and a graphite-based active material, and a mass ratio between the silicon-based active material and the graphite-based active material may satisfy 3 to 97 : 97 to 3 or 10 to 90 : 90 to 10, but is not limited thereto.

The silicon-based active material may have an average particle diameter of 0.1 to 50 μm, but is not limited thereto, and the silicon-based active material may include a silicon-based material, for example, Si, $SiO_x$ ($0<x<2$), a Si-Q alloy (Q is one or a combination of two or more selected from the group consisting of alkali metals, alkaline earth metals, Group 13 element, Group 14 elements, Group 15 elements, Group 16 elements, transition metals, rare earth elements, and the like, except Si and C), silicon-carbon composites, and the like. The silicon-carbon composite may include, for example, silicon carbide (SiC) or silicon-carbon particles having a core-shell structure, and as a non-limiting example, may be formed by depositing a silicon layer on a graphite core surface. As another example, the silicon-carbon particles may be formed by coating commercially available graphite particles with a silicon layer by a chemical vapor deposition (CVD) process using a silicon precursor compound such as a silane-based compound. In some exemplary embodiments, the particles may further include amorphous carbon coating, but are not limited thereto.

The graphite-based active material may be artificial graphite or a mixture of artificial graphite and natural graphite. The graphite-based active material may have an average particle diameter (D50) of 5 to 30 μm, or 8 to 20 μm, and may be amorphous, plate-like, flaky, spherical, or fibrous, but is not limited thereto. Meanwhile, when the graphite-based active material is a mixture of artificial graphite and natural graphite, specifically, the content of the artificial graphite may be equivalent to or higher than the content of the natural graphite, and the artificial graphite and the natural graphite may be included at a weight ratio of 50 to 95 : 50 to 5, or 50 to 90 : 50 to 10, or 60 to 90 : 40 to 10. Thus, adhesive strength between a current collector and an active material layer may be further improved, and a high-rate charge capacity retention rate and charge/discharge cycle characteristics of a battery may be improved.

The negative electrode slurry composition for a secondary battery according to an exemplary embodiment may further comprise a conductive material and a solvent.

The conductive material is used for imparting conductivity to an electrode, and may be used without significant limitation as long as it is an electronically conductive material without causing a chemical change in a battery, and as the conductive material, one or a combination of two or more selected from the group consisting of graphite-based conductive materials, carbon black-based conductive materials, graphene, carbon nanotubes (CNT), metal and metal compound-based conductive materials, and the like may be used. Non-limiting examples of the carbon black-based conductive material include acetylene black, ketjen black, denka black, thermal black, channel black, and the like, the carbon nanotubes may have an average length of 1 to 20 μm, but is not limited thereto. Non-limiting examples of the carbon nanotubes include single-walled carbon nanotubes (SWCNT), doublewalled carbon nanotubes (DWCNT), multi-walled carbon nanotubes (MWCNT), rope carbon nanotubes, and the like. Non-limiting examples of a metal-based or metal compound-based conductive material include tin, tin oxide, tin phosphate ($SnPO_4$), titanium oxide, potassium titanate, perovskite materials such as $LaSrCoO_3$ and $LaSrMnO_3$, and the like, but the present disclosure is not limited to the listed conductive materials. The conductive material may be included at 0.05 to 30 wt% with respect to the total weight of the negative electrode active material layer, but the content of the conductive material may be appropriately adjusted depending on its application purpose and physical properties.

The solvent is a solvent for forming a negative electrode slurry composition for a secondary battery, and may be an aqueous solvent such as water. The solvent may be used at a content to allow the composition to have appropriate viscosity, considering the applicability and coatability of the negative electrode slurry composition for a secondary battery. Otherwise, an organic solvent or a mixed solvent of an organic solvent and water may be used as needed. When an organic solvent is used, a non-limiting example thereof may be one or more of alcohol, ether, ester, ketone, hydrocarbon, or the like, and is not limited thereto as long as the binder for a secondary battery described above is dissolved in the solvent.

The solid content of the negative electrode slurry composition for a secondary battery according to an exemplary embodiment may be 1 wt% or more, 5 wt% or more, 10 wt% or more, 20 wt% or more, 35 wt% or more, 40 wt% or more, 45 wt% or more, or 50 wt% or more, and though the upper limit is not limited, may be 60 wt% or less, 70 wt% or less, 80 wt% or less, or 95 wt% or less, or any values or subrange within these ranges, and is not limited thereto.

The solid content (dry weight) of the negative electrode slurry composition for a secondary battery according to an exemplary embodiment may be 1 to 95 wt%, 5 to 95 wt%, 10 to 95 wt%, 20 to 80 wt%, 35 to 80 wt%, 40 to 70 wt%, 45 to 70 wt%, or 50 to 60 wt%, and is not limited thereto.

The present disclosure provides a negative electrode for a secondary battery comprising a current collector; and a negative electrode active material layer disposed on the current collector, wherein the negative electrode active material layer comprises the binder for a secondary battery described above.

The current collector may be one or a combination of two or more selected from the group consisting of copper foil, nickel foil, stainless foil, titanium foil, nickel foam, copper foam, a polymer substrate coated with a conductive metal, and the like, but is not limited thereto, and materials known in the art may be used without limitation.

In the negative electrode for a secondary battery according to an exemplary embodiment, the binder for a secondary battery may be included at 0.5 to 30 wt%, or 0.5 to 20 wt%, or 1 to 10 wt% with respect to the total weight of the negative electrode active material layer, but the amount of the binder is not particularly limited as long as the performance of a secondary battery to be desired in the present disclosure is not impaired. When the content of the binder satisfies the range, the expansion of a negative electrode and the desorption of a negative electrode occurring during charging and discharging may be effectively suppressed, thereby implementing further improved capacity and energy density of the secondary battery.

The negative electrode active material layer is subjected to a subsequent process such as drying of the negative electrode slurry composition for a secondary battery described above, thereby preparing a negative electrode active material layer comprising the binder for a secondary battery, the negative electrode active material, the conductive material, and the like. Specifically, the negative electrode active material layer comprises the binder for a secondary battery comprising the copolymer, thereby effectively suppressing the desorption of the negative electrode and the conductive material and the expansion of the negative electrode.

In addition, the negative electrode active material layer may have a thickness of 1 to 150 μm, or 10 to 100 μm, or 20 to 80 μm, but is not limited thereto. The thickness may be adjusted by coating an appropriate application amount depending on the solid content of the negative electrode slurry composition for a secondary battery described above, and specifically, the coating amount may be 0.1 to 20 $mg/cm^2$, or 1 to 10 $mg/cm^2$, but is not limited thereto.

The present disclosure may provide a secondary battery comprising a negative electrode for a secondary battery and a positive electrode, wherein the negative electrode for a secondary battery comprises a current collector; and a negative electrode active material layer disposed on the current collector, and the negative electrode active material layer comprises the binder for a secondary battery described above and a negative electrode active material. Here, since the binder for a secondary battery, the negative electrode active material, the negative electrode active material layer, the current collector, and the negative electrode for a secondary battery are as described above, the detailed description thereof will be omitted.

Specifically, the secondary battery may comprise the negative electrode for a secondary battery described above, a positive electrode, and an electrolyte, and may further comprise a separator interposed between the positive electrode and the negative electrode.

The positive electrode may comprise a current collector; and a positive electrode active material layer formed by applying a composition for a positive electrode comprising a positive electrode active material on the current collector. As the current collector, the negative electrode current collector described above may be used, and any material known in the art may be used, but is not limited thereto. In addition, the positive electrode active material layer may comprise a positive electrode active material, and optionally, may further comprise a binder for a positive electrode and a conductive material. The positive electrode active material may be any positive electrode active material known in the art, and may be, for example, a composite oxide of lithium with a metal selected from cobalt, manganese, nickel, and a combination thereof, but is not limited thereto. The binder for a positive electrode and the conductive material may be the negative electrode binder and the negative electrode conductive material described above, and any materials known in the art may be used, but is not limited thereto.

The electrolyte may be an electrolyte solution comprising an organic solvent and a lithium salt. The organic solvent serves as a medium in which ions involved in the electrochemical reaction of a battery may move, and for example, may be carbonate-based, ester-based, ether-based, ketone-based, alcoholbased, or aprotic solvents, the organic solvent may be used alone or in combination of two or more, and a mixing ratio when used in combination of two or more may be appropriately adjusted depending on battery performance to be desired. In addition, organic solvents known in the art may be used, but the present disclosure is not limited thereto.

The lithium salt is dissolved in the organic solvent and may act as a source of the lithium ion in the battery to allow basic operation of a lithium secondary battery and to promote movement of lithium ions between a positive electrode and a negative electrode. A non-limiting example of the lithium salt may include $LiPF_6$, $LiBF_4$, $LiSbF_6$, $LiAsF_6$, $LiN(SO_3C_2F_5)_2$, $LiN(CF_3SO_2)_2$, $LiC_4F_9SO_3$, $LiClO_4$, $LiAlO_2$, $LiAlCl_4$, $LiN(C_xF_{2x+1}SO_2)(C_yF_{2y+1}SO_2)$ (x and y are natural numbers), LiCl, LiI, $LiB(C_2O_4)_2$, or a combination thereof, but is not limited thereto. The concentration of the lithium salt may be in a range of 0.1 M to 5.0 M, or 0.1 M to 2.0 M. When the concentration of the lithium salt satisfies the range, the electrolyte solution has appropriate conductivity and viscosity, thereby showing excellent electrolyte solution performance and effectively improving lithium ion mobility.

In addition, the electrolyte solution may further comprise pyridine, triethyl phosphate, triethanolamine, cyclic ether, ethylene diamine, n-glyme, hexaphosphate triamide, a nitrobenzene derivative, sulfur, a quinone imine dye, N-substituted oxazolidinone, N,N-substituted imidazolidine, ethylene gylcol, dialkyl ether, ammonium salt, pyrrole, 2-methoxyethanol, aluminum trichloride, and the like, for improving charge and discharge characteristics, flame retardant characteristics, and the like, if necessary. In some cases, a halogen-containing solvent such as carbon tetrachloride and ethylene trifluoride may be further included for imparting non-flammability, and fluoro-ethylene carbonate (FEC), propene sultone (PRS), fluoro-propylene carbonate (FPC), and the like may be further included for improving conservation properties at a high temperature.

The separator is a separator having micropores formed through which ions may pass, and a non-limiting example thereof may be one or a combination of two or more selected from the group consisting of glass fiber, polyester, polyethylene, polypropylene, polytetrafluoroethylene, and the like and may be in a non-woven fabric or woven fabric form. Specifically, a polyolefin-based polymer separator such as polyethylene and polypropylene may be mainly used in the lithium secondary battery, but the present disclosure is not limited thereto. In addition, a separator coated with a composition including a ceramic component or a polymer material may be used for securing thermal resistance or mechanical strength, the separator may be used optionally in a monolayer or multi-layer structure, and a separator known in the art may be used, but is not limited thereto.

The secondary battery according to an exemplary embodiment may have an expansion rate of 75% or less, or 60% or less, or 50% or less, or 45% or less, and though the lower limit is not particularly limited, may be 0.1% or more. The secondary battery according to an exemplary embodiment satisfies the expansion rate range, thereby effectively preventing the separation and the desorption of a negative electrode by strong adhesive strength even with the volume change of an electrode occurring as charge and discharge progress, and improving the structural stability of an electrode to suppress an increase in resistance by volume expansion, and thus, significantly improved charge/discharge cycle characteristics and battery performance may be implemented.

The capacity retention rate after 50 cycles of charging and discharging of the secondary battery according to an exemplary embodiment may be 80% or more, or 85% or more or 90% or more. The secondary battery according to an exemplary embodiment may maintain a high capacity retention rate after charging and discharging, and may suppress the expansion of the negative electrode to effectively improve the charge/discharge cycle characteristics and the performance of a secondary battery.

The present disclosure provides a method of preparing a binder for a secondary battery comprising: saponifying a copolymer containing a repeating unit (a) of the following Chemical Formula 1, a repeating unit (c) of the following Chemical Formula 3, and a repeating unit (e) of the following Chemical Formula 5 (hereinafter, referred to as a first

copolymer) to prepare a saponified copolymer, wherein the saponified copolymer is a copolymer comprising: the repeating unit (a) of the following Chemical Formula 1, a repeating unit (b) of the following Chemical Formula 2, the repeating unit (c) of the following Chemical Formula 3, a repeating unit (d) of the following Chemical Formula 4, and the repeating unit (e) of the following Chemical Formula 5:

[Chemical Formula 1]

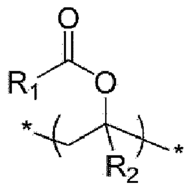

[Chemical Formula 2]

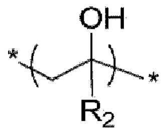

[Chemical Formula 3]

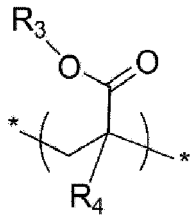

[Chemical Formula 4]

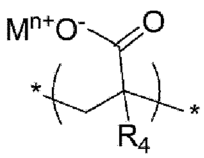

[Chemical Formula 5]

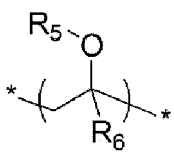

.

The detailed description of Chemical Formulae 1 to 5 is as described above, and thus, will be omitted.

In a method of preparing a binder for a secondary battery according to an exemplary embodiment, a first copolymer may be prepared from a polymerizable composition comprising vinyl acetate(to form repeating unit (a) of Chemical Formula 1), alkyl (meth)acrylate(to form repeating unit (c) of the following Chemical Formula 3), and alkyl vinyl ether(to form repeating unit (e) of Chemical Formula 5), and may be prepared by various known methods such as emulsion polymerization, suspension polymerization, solution polymerization, or bulk polymerization. Otherwise, as the first copolymer, commercially available products may be used without limitation.

A non-limiting example of the alkyl (meth)acrylate may be one or two or more selected from the group consisting of methyl acrylate, ethyl acrylate, propyl acrylate, isopropyl acrylate, n-butyl acrylate, isobutyl acrylate, methyl methacrylate, ethyl methacrylate, propyl methacrylate, isopropyl methacrylate, n-butyl methacrylate, isobutyl methacrylate, and the like. In addition, since an example of the specific compound of the alkyl vinyl ether is as described above, the description thereof will be omitted.

In addition, the first copolymer may comprise known repeating units other than the repeating unit (a), the repeating unit (c), and the repeating unit (e), but is not limited thereto.

In the method of preparing a binder for a secondary battery according to an exemplary embodiment, a : c of the first copolymer may be at a mole fraction ratio of 0.05 to 0.95 : 0.95 to 0.05, or 0.3 to 0.9 : 0.7 to 0.1, or 0.5 to 0.85 : 0.5 to 0.15, but is not limited thereto, wherein a and c are mole fractions of the repeating unit (a) and the repeating unit (c), respectively, in the first copolymer. In addition, e of the first copolymer may be 0.005 to 0.2, or 0.01 to 0.15, or 0.01 to 0.1, wherein e is a mole fraction of the repeating unit (e) in the first copolymer.

In the method of preparing a binder for a secondary battery according to an exemplary embodiment, the saponification reaction may be used without limitation as long as it is known or commonly used, and specifically, may be performed by dissolving or dispersing the first copolymer in water with alcohol or alcohol and using an alkali catalyst or an acid catalyst, and the alcohol may be methanol, ethanol, propanol, tert-butanol, and the like, without limitation, but specifically, may be methanol. The concentration of the copolymer in the alcohol may satisfy the range of 10 to 60 wt%, or 15 to 55 wt%, but is not limited, and the concentration may be appropriately adjusted depending on the viscosity. As the catalyst, alkali catalysts such as alkali metal hydroxides or alkylates such as sodium hydroxide, potassium hydroxide, lithium hydroxide, sodium methylate, sodium ethylate, potassium methylate, and/or lithium methylate, or acid catalysts such as sulfuric acid, hydrochloric acid, nitric acid, methanesulfonic acid, zeolite, and cation exchange resin may be used. In addition, the reaction temperature of the saponification reaction is not particularly limited, but may be 10 to 80°C, or 20 to 70°C.

In the method of preparing a binder for a secondary battery according to an exemplary embodiment, by saponifying the first copolymer, the repeating unit (a) of the first copolymer may form the repeating unit (b) and the repeating unit (c) of the first copolymer may form the repeating unit (d), and the saponified copolymer may include the repeating units (a) to (d).

In the method of preparing a binder for a secondary battery according to an exemplary embodiment, the degree of saponification in the saponification step may be calculated by (b+d)/(a+b+c+d+e), and the calculated value may satisfy Equation 1, and specifically, may satisfy Equation 2, wherein a, b, c, d, and e are mole fractions of the repeating units (a), (b), (c), (d), and (e), respectively, in the saponified copolymer. When the saponified copolymer satisfies Equation 1, specifically Equation 2, coatability, adhesive properties, and tensile strength may be further improved, and when a negative electrode slurry composition for a secondary battery is prepared by including the copolymer, the exfoliation and the desorption refer to the negative electrode from a current collector may be effectively suppressed. In addition, when a negative electrode slurry composition for a secondary battery and a negative electrode for a secondary battery are prepared using the saponified copolymer satisfying the range, a binding force between the negative electrode active material and the current collector is effectively improved to effectively suppress the expansion of a negative electrode, thereby improving the charge/discharge cycle characteristics and the performance of a secondary battery, but the numerical range of the degree of saponification is not limited thereto as long as the purpose of the present disclosure is achieved.

In the method of preparing a binder for a secondary battery according to an exemplary embodiment, the detailed description of the saponified copolymer and an example of the compound are as described for the copolymer of the binder for a secondary battery according to an exemplary embodiment, and thus, will be omitted.

Hereinafter, the present disclosure will be described in more detail with reference to the examples and the comparative examples. However, the following examples and the comparative examples are only an example for describing the present disclosure in more detail, and do not limit the present disclosure in any way.

The physical properties of the following examples and comparative examples were measured by the following methods.

[Method of evaluating physical properties]

1. Weight average molecular weight [kDa]

The weight average molecular weight of the copolymers prepared in the examples and the comparative examples were measured using GPC (Agilent). Agilent Mixed C (x2ea) as a GPC column, tetrahydrofuran as a solvent, and polystyrene as a standard material were used, and the analysis was performed at a flow rate of 1 ml/min. at room temperature.

2. Tensile strength [kgf/cm$^2$] and yield strain [%]

The tensile strength and the yield strain of the binder compositions prepared in the examples and the comparative examples were measured in accordance with ASTM D638. A specimen obtained by cutting a film having a thickness of 50 $\mu$m into type IV was prepared, the measurement was performed under the conditions of a speed of 3 mm/min., and the measured values are listed in Table 1.

3. Adhesion test [N/20 mm]

The adhesion of the negative electrodes manufactured in the examples and the comparative examples were measured using UTM. The surface of a rolled negative electrode was adhered to a tape, the measurement was performed under the conditions of an angle of 180° and a speed of 30 mm/min., and the measured values are listed in Table 1.

4. Negative electrode slurry composition coatability

The negative electrode slurry compositions for a secondary battery prepared in the examples and the comparative examples were coated on a copper foil, and the coatability was evaluated based on the following criteria. The evaluation results are shown in the following Table 1.

◎: coated in a uniform form throughout and no agglomerate observed
◦: coated in a uniform form throughout
(less than 5 agglomerates observed per unit area (100 mm×100 mm))
△: some agglomerates observed
(5 or more and less than 20 agglomerates observed per unit area (100 mm×100 mm))
×: many agglomerates observed
(20 or more agglomerates observed per unit area (100 mm×100 mm))

5. Evaluation of battery performance

A CR2016 coin type half cell was manufactured in the examples and the comparative examples and the electrochemical properties were evaluated.

1) Charge capacity [mAh/g] and discharge capacity [mAh/g] at cycle 1, and initial (charge and discharge) efficiency [%]

Secondary batteries manufactured in the examples and the comparative examples were charged and discharged once at 0.1 C between 0.01 V and 1.5 V, a charge capacity at cycle 1 (initial charge capacity)(mAh/g), a discharge capacity at cycle 1 (mAh/g), and initial (charge and discharge) efficiency (%) were measured, respectively, and the results are shown in the following Table 2.

2) Expansion rate (%)

The thickness (t1) of the secondary battery negative electrodes manufactured in the examples and the comparative examples was measured, a secondary battery was manufactured and charged to 0.01 V at 0.1 C-rate, and a half cell was disassembled to measure the thickness (t2) of the negative electrode after charging. The expansion rate of the negative electrode was calculated by the following calculation formula, and the calculated expansion rate is shown in the following Table 2.

[Calculation Formula] Expansion rate (%) = (t2-t1)/(t1-current collector thickness)×100

wherein a current collector thickness is the thickness of a negative electrode current collector used in the manufacture of the secondary battery negative electrode.

3) Capacity retention rate [%] after charging and discharging of 50 cycles

The secondary batteries manufactured in the examples and the comparative examples were charged and

discharged three times at 0.1 C between 0.01 V and 1.5 V, and 50 cycles of charging and discharging to 0.5 C between 0.01 V and 1.0 V were performed to evaluate the charge/discharge cycle characteristics of the batteries. During the charging, CV current conditions were 0.01 C CV cutoff. The charge/discharge cycle characteristics were obtained by measuring a capacity retention rate after 50 cycles of charging and discharging, specifically by showing a ratio (%) of a discharge capacity after repeating 50 cycles of charging and discharging to an initial discharge capacity. The results are shown in the following Table 2.

[Example 1]

<Preparation of copolymer and binder composition>

90 g of water, 0.8 g of sodium dodecylbenzenesulfonate, and 0.1 g of sodium hydrogen carbonate were added to a round bottom flask under a nitrogen atmosphere, stirring was performed, an aqueous solution of 0.04 g of potassium persulfate dissolved in 2 g of water was added at 65°C, 30.0 g of vinyl acetate, 8.6 g of methyl acrylate, and 1.0 g of n-butyl vinyl ether were added right away thereto for 3 hours, and stirring was further performed at 65°C for 2 hours to complete the polymerization reaction. 450 g of a saturated sodium chloride aqueous solution was added to the polymerization solution to agglomerate a copolymer, and filtration and drying were performed to obtain 38 g of a vinyl acetate/methyl acrylate/n-butyl vinyl ether copolymer. The obtained copolymer was dissolved in tetrahydrofuran, filtration was performed with a filter, and a weight average molecular weight determined by a molecular weight measurement device (GPC, RI detector) was 772 kDa.
30 g of the copolymer prepared above, 150 ml of methanol, and 8.2 g of sodium hydroxide were added to 150 ml of water and were completely dissolved therein, and stirring was performed at 60°C for 12 hours to perform a saponification reaction. Next, the saponified solution was subjected to solidification in 1 L of ethanol, filtration, and drying steps, thereby finally obtaining 20 g of the saponified copolymer having a mole composition ratio of a vinyl acetate/vinyl alcohol/methyl acrylate/sodium acrylic acid/n-butyl vinyl ether copolymer of 18/48/6/26/2. The composition ratio was confirmed by $^{13}$C-NMR.
10 g of the saponified copolymer was added to 90 g of water, and stirring was performed at 60°C for 6 hours to dissolve the copolymer to obtain a binder composition. The tensile strength of the prepared binder composition was measured, and is listed in the following Table 1.

<Manufacture of secondary battery negative electrode>

A negative electrode active material, a CNT-based conductive material, and the binder composition prepared above were added to water so that a weight ratio of 95.75 : 0.25 : 4.0 was satisfied based on a dry weight, and were mixed, thereby preparing a negative electrode slurry composition for a secondary battery (solid content: 50 wt%). Specifically, the negative electrode active material was a mixture of 15 wt% of a silicon-based active material (SiC) having an average particle diameter of 6 μm and 85 wt% of graphite (artificial graphite having an average particle diameter (D50) of 13 μm), the CNT-based conductive material was a SW-CNT-based conductive material having an average length of 5 μm, and the negative electrode slurry composition satisfying the weight ratio was sufficiently stirred at a speed of 45 rpm for 30 minutes or more using a planetary mixer and dispersed. The thus-prepared negative electrode slurry composition was applied to a negative electrode Cu current collector (thickness: 10 μm) at an application amount of 5.6 mg/cm$^2$, dried in a vacuum oven at 70°C for 10 hours, and rolled under the conditions of a temperature of 50°C and a pressure of 15 MPa, thereby manufacturing a negative electrode having a final thickness of 50 μm. The adhesion of the negative electrode was measured and is listed in the following Table 1.

<Manufacture of coin cell (secondary battery)>

A polyethylene separator (thickness: 20 μm) was interposed between the negative electrode manufactured above and a lithium metal (thickness: 1 mm), and 1 M LiPF6 dissolved in a mixed solvent including ethylene carbonate (EC)/ fluoroethylene carbonate (FEC)/ ethylmethyl carbonate (EMC)/ diethyl carbonate (DEC) at a volume ratio of 20/10/20/50 was used as an electrolyte solution, thereby manufacturing a coin cell-type half battery (CR2016 coin half cell) according to a common manufacturing method. Battery performance was evaluated and is listed in the following Table 2.

[Example 2]

The process was performed in the same manner as in Example 1, except that 9.7 g of sodium hydroxide was used in the saponification reaction. The mole composition ratio of the synthesized vinyl acetate/vinyl alcohol/methyl

acrylate/sodium acrylic acid/n-butyl vinyl ether copolymer was 11/51/6/29/3. The measured physical properties are shown in the following Tables 1 and 2.

[Example 3]

The process was performed in the same manner as in Example 1, except that 11.5 g of potassium hydroxide was used instead of sodium hydroxide during the saponification reaction. The mole composition ratio of the synthesized vinyl acetate/vinyl alcohol/methyl acrylate/potassium acrylic acid/n-butyl vinyl ether copolymer was 13/51/4/30/2. The measured physical properties are shown in the following Tables 1 and 2.

[Example 4]

The process was performed in the same manner as in Example 1, except that 4.9 g of lithium hydroxide was used instead of sodium hydroxide in the saponification reaction. The mole composition ratio of the synthesized vinyl acetate/vinyl alcohol/methyl acrylate/lithium acrylic acid/n-butyl vinyl ether copolymer was 16/49/7/26/2. The measured physical properties are shown in the following Tables 1 and 2.

[Example 5]

The process was performed in the same manner as in Example 1, except that 30 g of vinyl acetate, 10 g of methyl acrylate, and 6.0 g of n-butyl vinyl ether were used in the synthesis of the copolymer and 7.5 g of sodium hydroxide was used in the saponification reaction. The weight average molecular weight of the synthesized vinyl acetate/methyl acrylate/n-butyl vinyl ether copolymer was 475 kDa, and the mole composition ratio of the vinyl acetate/vinyl alcohol/methyl acrylate/sodium acrylic acid/n-butyl vinyl ether copolymer was 12/52/7/21/8. The measured physical properties are shown in the following Tables 1 and 2.

[Example 6]

The process was performed in the same manner as in Example 5, except that 8.8 g of sodium hydroxide was used in the saponification reaction. The mole composition ratio of the synthesized vinyl acetate/vinyl alcohol/methyl acrylate/sodium acrylic acid/n-butyl vinyl ether copolymer was 7/56/4/24/9. The measured physical properties are shown in the following Tables 1 and 2.

[Example 7]

The process was performed in the same manner as in Example 5, except that 4.5 g of lithium hydroxide was used instead of sodium hydroxide in the saponification reaction. The mole composition ratio of the synthesized vinyl acetate/vinyl alcohol/methyl acrylate/lithium acrylic acid/n-butyl vinyl ether copolymer was 11/52/6/23/8. The measured physical properties are shown in the following Tables 1 and 2.

[Example 8]

The process was performed in the same manner as in Example 1, except that 0.8 g of n-propyl vinyl ether was used instead of n-butyl vinyl ether in the synthesis of the copolymer. The mole composition ratio of the synthesized vinyl acetate/vinyl alcohol/methyl acrylate/sodium acrylic acid/n-propyl vinyl ether copolymer was 16/49/6/27/2. The measured physical properties are shown in the following Tables 1 and 2.

[Example 9]

The process was performed in the same manner as in Example 8, except that 9.6 g of sodium hydroxide was used in the saponification reaction. The mole composition ratio of the synthesized vinyl acetate/vinyl alcohol/methyl acrylate/sodium acrylic acid/n-propyl vinyl ether copolymer was 10/53/5/29/3. The measured physical properties are shown in the following Tables 1 and 2.

[Comparative Example 1]

The process was performed in the same manner as in Example 1, except that a mixture of styrene-butadiene rubber (SBR, Sigma Aldrich) and carboxymethyl cellulose sodium salt (CMC, Sigma Aldrich) combined at a weight ratio

of 1:1 was used instead of the binder composition in the manufacture of a secondary battery negative electrode. The measured physical properties are shown in the following Tables 1 and 2.

[Comparative Example 2]

<Preparation of copolymer and binder composition>

90 g of water, 0.91 g of sodium dodecylbenzenesulfonate, and 0.13 g of sodium hydrogen carbonate were added to a round bottom flask under a nitrogen atmosphere, the temperature was raised to 65° with stirring, an aqueous solution of 0.05 g of potassium persulfate dissolved in 2 g of water was added, 33.5 g of vinyl acetate and 16.5 g of methyl acrylate were added thereto for 3 hours, and stirring was further performed for 2 hours to complete the polymerization reaction. 450 g of a saturated sodium chloride aqueous solution was added to the polymerization solution to agglomerate a copolymer, and filtration and drying were performed to obtain 42 g of a vinyl acetate/methyl acrylate copolymer. The obtained polymer was dissolved in tetrahydrofuran, filtration was performed with a filter, and a weight average molecular weight determined by a molecular weight measurement device (GPC, RI detector) was 760 kDa.

30 g of the copolymer, 150 ml of methanol, and 12.5 g of sodium hydroxide were added to 150 ml of water and were completely dissolved therein, and stirring was performed at 60°C for 12 hours to perform a saponification reaction. Next, the saponified solution was subjected to solidification in 1 L of ethanol, filtration, and drying steps, thereby finally obtaining a saponified copolymer having a mole composition ratio of vinyl acetate/vinyl alcohol/methyl acrylate/sodium acrylic acid of 18/49/7/26. The composition ratio was confirmed by 13C-NMR. 10 g of the saponified copolymer was added to 90 g of water, and stirring was performed at 60°C for 6 hours to dissolve the copolymer to obtain a binder composition. The tensile strength of the prepared binder composition was measured, and is listed in the following Table 1. The subsequent process was performed in the same manner as in Example 1, and the measured physical properties are shown in the following Tables 1 and 2.

[Comparative Example 3]

The process was performed in the same manner as in Example 1, except that 2 g of styrene was used instead of n-butyl vinyl ether in the synthesis of the copolymer. The mole composition ratio of the synthesized vinyl acetate/vinyl alcohol/methyl acrylate/sodium acrylic acid/styrene copolymer was 16/49/6/27/2. The measured physical properties are shown in the following Tables 1 and 2.

[Comparative Example 4]

The process was performed in the same manner as in Example 1, except that 2.1 g of n-propyl vinyl ether was used instead of n-dodecyl vinyl ether in the synthesis of the copolymer. The mole composition ratio of the synthesized vinyl acetate/vinyl alcohol/methyl acrylate/sodium acrylic acid/n-dodecyl vinyl ether copolymer was 15/50/8/25/2. The measured physical properties are shown in the following Tables 1 and 2.

[Table 1]

| | Degree of saponificat ion (b+d)/(a+b+ c+d+e) | Weight average molecular weight (Mw, kDa) | Tensile strength ($kgf/cm^2$) | Yield strain (%) | Adhesion (N/20 mm) | Slurry composition coatability |
|---|---|---|---|---|---|---|
| Example 1 | 0.74 | 772 | 1584 | 5.2 | 5.5 | ◎ |
| Example 2 | 0.80 | 772 | 1748 | 5.3 | 5.2 | ◦ |
| Example 3 | 0.81 | 772 | 796 | 5.1 | 6.3 | ◎ |
| Example 4 | 0.75 | 772 | 1013 | 3.7 | 6. 0 | ◦ |
| Example 5 | 0.73 | 475 | 999 | 5.6 | 5.3 | ◎ |
| Example 6 | 0.80 | 475 | 1184 | 5.3 | 5. 6 | ◦ |
| Example 7 | 0.75 | 475 | 1327 | 3.4 | 5. 8 | ◦ |
| Example 8 | 0.76 | 734 | 1432 | 4.9 | 5.3 | ◦ |
| Example 9 | 0.82 | 734 | 1645 | 4.5 | 5. 8 | ◦ |

(continued)

| | Degree of saponificat ion (b+d)/(a+b+ c+d+e) | Weight average molecular weight (Mw, kDa) | Tensile strength ($kgf/cm^2$) | Yield strain (%) | Adhesion (N/20 mm) | Slurry composition coatability |
|---|---|---|---|---|---|---|
| Comparative Example 1 | - | - | 134 | 180 | 2.5 | △ |
| Comparative Example 2 | 0.75 | 760 | 1340 | 4.0 | 4.0 | ◦ |
| Comparative Example 3 | 0.76 | 450 | 1298 | - | 2.4 | △ |
| Comparative Example 4 | 0.75 | 920 | 1262 | 4.4 | 4.7 | ◦ |

In Table 1, it was confirmed that the binder for a secondary battery according to the examples had excellent tensile strength and adhesion, and when a negative electrode slurry composition including the binder was prepared, the composition had no agglomeration and excellent coatability.

[Table 2]

| | 1 cycle charge capacity (mAh/g) | 1 cycle discharge capacity (mAh/g) | Initial efficiency (%) | Expansion rate (%) | Capacity retention rate (%) after 50 cycles of charging and discharging |
|---|---|---|---|---|---|
| Example 1 | 630 | 583 | 92.5 | 37 | 94 |
| Example 2 | 628 | 581 | 92.5 | 41 | 89 |
| Example 3 | 631 | 582 | 92.2 | 35 | 94 |
| Example 4 | 626 | 578 | 92.3 | 40 | 90 |
| Example 5 | 628 | 581 | 92.5 | 44 | 92 |
| Example 6 | 629 | 579 | 92.1 | 41 | 92 |
| Example 7 | 627 | 578 | 92.2 | 39 | 91 |
| Example 8 | 625 | 577 | 92.3 | 45 | 92 |
| Example 9 | 626 | 578 | 92.4 | 43 | 92 |
| Comparative Example 1 | 613 | 566 | 92.4 | 78 | 64 |
| Comparative Example 2 | 627 | 581 | 92.6 | 61 | 78 |
| Comparative Example 3 | 626 | 577 | 92.2 | 70 | 72 |
| Comparative Example 4 | 629 | 578 | 92.0 | 51 | 77 |

In Table 2, it was confirmed that the binder for a secondary battery according to an exemplary embodiment improved a binding force between a negative electrode current collector and a negative electrode active material by excellent coatability and adhesion, and had a significantly low expansion rate and an effectively improved capacity retention rate after 50 cycles of charging and discharging, as compared with the comparative examples.

In particular, Example 1 using butyl vinyl ether having 4 carbon atoms as a monomer showed remarkable low expansion rate and improved capacity retention rate after 50 cycles as compared with Comparative Example 2, and Example 1 also showed significantly improved physical properties even as compared with Comparative Example 3 using styrene and Comparative Example 4 using alkyl vinyl ether having more carbon atoms, and it was confirmed that the

secondary battery manufactured using Example 1 may implement more improved physical properties.

Thus, it was found that the binder for a secondary battery described above improves a binding force between the negative electrode current collector and the negative electrode active material, thereby obtaining an effect of suppressing the exfoliation and the desorption of the negative electrode, and thus, the expansion of the negative electrode is effectively suppressed to improve the charge/discharge cycle characteristics and the performance of a secondary battery.

The present disclosure may provide a binder for a secondary battery having improved mechanical properties and adhesion properties, a negative electrode slurry composition for a secondary battery including the same, a negative electrode manufactured using the same, and a secondary battery including the negative electrode.

Accordingly, the binder for a secondary battery according to an exemplary embodiment may include a copolymer containing specific repeating units, thereby producing a novel binder, and when it is applied to a negative electrode and a secondary battery, the expansion of the negative electrode is effectively suppressed, and the charge/discharge cycle characteristics and the performance of the secondary battery are significantly improved. In addition, the binder for a secondary battery has improved coatability and adhesion to effectively suppress the exfoliation and desorption of the negative electrode, thereby improving the performance of the secondary battery.

Hereinabove, although the present invention has been described by specific matters and limited exemplary embodiments, they have been provided only for assisting in the entire understanding of the present invention, and the present invention is not limited to the exemplary embodiments. Various modifications and changes may be made by those skilled in the art to which the present invention pertains from this description.

Therefore, the spirit of the present invention should not be limited to the above-described exemplary embodiments, and the following claims as well as all modified equally or equivalently to the claims are intended to fall within the scope and spirit of the invention.

## Claims

1. A binder for a secondary battery, the binder comprising a copolymer, wherein the copolymer comprises a repeating unit (a) of the following Chemical Formula 1, a repeating unit (b) of the following Chemical Formula 2, a repeating unit (c) of the following Chemical Formula 3, a repeating unit (d) of the following Chemical Formula 4, and a repeating unit (e) of the following Chemical Formula 5:

[Chemical Formula 1]

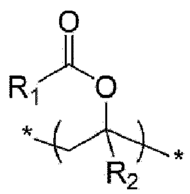

[Chemical Formula 2]

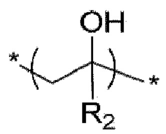

[Chemical Formula 3]

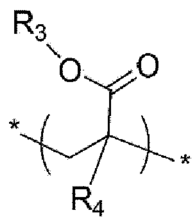

[Chemical Formula 4]

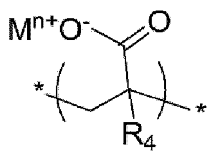

[Chemical Formula 5]

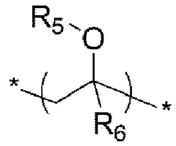

wherein

$R_1$, $R_3$, and $R_5$ are independently of one another substituted or unsubstituted hydrocarbyl having 1 to 10 carbon atoms;
$R_2$, $R_4$, and $R_6$ are independently of one another hydrogen or substituted or unsubstituted hydrocarbyl having 1 to 10 carbon atoms;
$M^{n+}$ is a cation having an oxidation number of n other than a hydrogen ion; and
n is an integer of 1 to 3.

2. The binder for a secondary battery of claim 1, wherein (a+b) : (c+d) of the copolymer is 0.05 to 0.95 : 0.95 to 0.05, wherein a, b, c, and d are mole fractions of the repeating units (a), (b), (c), and (d), respectively, in the copolymer.

3. The binder for a secondary battery of claim 1 or 2, wherein e of the copolymer is 0.005 to 0.2, wherein e is a mole fraction of the repeating unit (e) in the copolymer.

4. The binder for a secondary battery of any one of claims 1 to 3, wherein e of the copolymer is 0.01 to 0.1, wherein e is a mole fraction of the repeating unit (e) in the copolymer.

5. The binder for a secondary battery of any one of claims 1 to 4, wherein in Chemical Formula 5, $R_5$ is substituted or unsubstituted hydrocarbyl having 1 to 4 carbon atoms.

6. The binder for a secondary battery of any one of claims 1 to 5, wherein the copolymer satisfies the following Equation 1:

[Equation 1]

$$0.45 < (b+d)/(a+b+c+d+e) < 1.0$$

wherein
a, b, c, d, and e are mole fractions of the repeating units (a), (b), (c), (d), and (e), respectively, in the copolymer.

7. The binder for a secondary battery of any one of claims 1 to 6, wherein the copolymer has a weight average molecular weight of 100,000 to 2,000,000 Da.

8. The binder for a secondary battery of any one of claims 1 to 7, wherein the copolymer is a linear polymer.

9. The binder for a secondary battery of any one of claims 1 to 8, wherein the binder for a secondary battery is a binder for a lithium secondary battery negative electrode.

10. A secondary battery comprising: a positive electrode and a negative electrode for a secondary battery,

wherein the negative electrode for a secondary battery comprises: a current collector; and a negative electrode active material layer disposed on the current collector, and
the negative electrode active material layer comprises the binder for a secondary battery of any one of claims 1 to 9 and a negative electrode active material.

**11.** The secondary battery of claim 10, wherein the negative electrode active material comprises a silicon-based active material, preferably a silicon-based active material and a graphite-based active material.

**12.** The secondary battery of claim 11, wherein a mass ratio between the silicon-based active material and the graphite-based active material is 3 to 97 : 97 to 3.

**13.** The secondary battery of any one of claims 10 to 12, wherein the binder for a secondary battery is comprised at 0.5 to 30 wt% with respect to a weight of the negative electrode active material layer.

**14.** A method of preparing a binder for a secondary battery, the method comprising: saponifying a copolymer comprising a repeating unit (a) of the following Chemical Formula 1, a repeating unit (c) of the following Chemical Formula 3, and a repeating unit (e) of the following Chemical Formula 5 to prepare a saponified copolymer,
wherein the saponified copolymer is a copolymer comprising: the repeating unit (a) of the following Chemical Formula 1, a repeating unit (b) of the following Chemical Formula 2, the repeating unit (c) of the following Chemical Formula 3, a repeating unit (d) of the following Chemical Formula 4, and the repeating unit (e) of the following Chemical Formula 5:

[Chemical Formula 1]

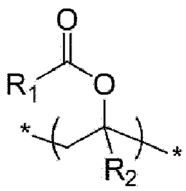

[Chemical Formula 2]

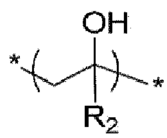

[Chemical Formula 3]

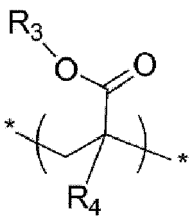

[Chemical Formula 4]

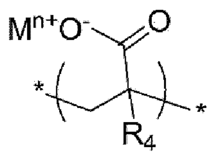

[Chemical Formula 5]

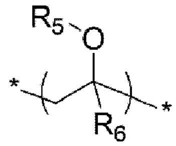

wherein

$R_1$, $R_3$, and $R_5$ are independently of one another substituted or unsubstituted hydrocarbyl having 1 to 10 carbon atoms;
$R_2$, $R_4$, and $R_6$ are independently of one another hydrogen or substituted or unsubstituted hydrocarbyl having 1 to 10 carbon atoms;
$M^{n+}$ is a cation having an oxidation number of n other than a hydrogen ion; and
n is an integer of 1 to 3.

**15.** The method of preparing a binder for a secondary battery of claim 14, wherein a degree of saponification in the saponification step is more than 0.45 and less than 1.0, and
the degree of saponification is calculated by (b+d)/(a+b+c+d+e), wherein a, b, c, d, and e are mole fractions of the repeating units (a), (b), (c), (d), and (e), respectively, in the saponified copolymer.

Europäisches Patentamt
European Patent Office
Office européen des brevets

# EUROPEAN SEARCH REPORT

Application Number
EP 22 21 0757

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | KR 2021 0020759 A (SK INNOVATION CO LTD [KR]) 24 February 2021 (2021-02-24)<br>* manufacturing examples 2 and 3 *<br>----- | 1-5,7-14<br>6,15 | INV.<br>H01M4/62<br>H01M4/133<br>H01M4/134<br>H01M4/36<br>H01M4/38<br>H01M4/587<br><br>ADD.<br>H01M4/02 |
| A | US 4 102 842 A (FUJIMOTO MASANORI ET AL) 25 July 1978 (1978-07-25)<br>* the whole document *<br>----- | 1-15 | |
| A | US 2021/050595 A1 (KIM JOON SUP [KR] ET AL) 18 February 2021 (2021-02-18)<br>* the whole document *<br>----- | 1-15 | |
| A | US 4 452 949 A (PENNING ERNST [DE] ET AL) 5 June 1984 (1984-06-05)<br>* the whole document *<br>----- | 1-15 | |
| | | | TECHNICAL FIELDS SEARCHED (IPC) |
| | | | H01M |

The present search report has been drawn up for all claims

2

| Place of search | Date of completion of the search | Examiner |
|---|---|---|
| Munich | 12 April 2023 | Götz, Heide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 22 21 0757

This annex lists the patent family members relating to the patent documents cited in the above-mentioned European search report. The members are as contained in the European Patent Office EDP file on
The European Patent Office is in no way liable for these particulars which are merely given for the purpose of information.

12-04-2023

| Patent document cited in search report | Publication date | Patent family member(s) | Publication date |
|---|---|---|---|
| KR 20210020759 A | 24-02-2021 | NONE | |
| US 4102842 A | 25-07-1978 | DE 2633249 A1 | 03-02-1977 |
| | | FR 2318881 A1 | 18-02-1977 |
| | | GB 1530178 A | 25-10-1978 |
| | | US 4102842 A | 25-07-1978 |
| US 2021050595 A1 | 18-02-2021 | CN 112397717 A | 23-02-2021 |
| | | US 2021050595 A1 | 18-02-2021 |
| US 4452949 A | 05-06-1984 | CA 1196122 A | 29-10-1985 |
| | | US 4452949 A | 05-06-1984 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020210176985